# EUROPÄISCHE PATENTSCHRIFT

(11) **EP 3 697 646 B1**
(45) Veröffentlichungstag und Bekanntmachung des Hinweises auf die Patenterteilung: **08.12.2021**
(21) Anmeldenummer: 18785901.2
(22) Anmeldetag: 05.10.2018
(51) Int. Cl.: B60R 21/015

(54) **VERFAHREN ZUM BETREIBEN EINES SICHERHEITSSYSTEMS FÜR EINE SITZANLAGE EINES KRAFTFAHRZEUGS UND SICHERHEITSSYSTEM FÜR EINE SITZANLAGE EINES KRAFTFAHRZEUGS**
METHOD FOR OPERATING A SAFETY SYSTEM FOR A SEAT SYSTEM OF A MOTOR VEHICLE, AND SAFETY SYSTEM FOR A SEAT SYSTEM OF A MOTOR VEHICLE
PROCÉDÉ DESTINÉ À FAIRE FONCTIONNER UN SYSTÈME DE SÉCURITÉ POUR LES SIÈGES D'UN VÉHICULE AUTOMOBILE ET SYSTÈME DE SÉCURITÉ POUR LES SIÈGES D'UN VÉHICULE AUTOMOBILE

(30) Priorität: 16.10.2017 DE 102017218444
(43) Veröffentlichungstag der Anmeldung: 26.08.2020
(73) Patentinhaber: Audi AG, 85045 Ingolstadt (DE)
(72) Erfinder: PROFENDINER, Daniel, 85049 Ingolstadt (DE)
(86) Internationale Anmeldenummer: PCT/EP2018/077127
(87) Internationale Veröffentlichungsnummer: WO 2019/076648

(56) Entgegenhaltungen:
- GB-A- 2 410 593

## Beschreibung

Die Erfindung betrifft ein Verfahren zum Betreiben eines Sicherheitssystems für eine Sitzanlage eines Kraftfahrzeugs und ein Sicherheitssystem für eine Sitzanlage eines Kraftfahrzeugs.

In Kraftfahrzeugen werden zukünftig sehr wahrscheinlich immer häufiger elektronische Datenbrillen, beispielsweise in Form von Virtual-Reality-Brillen oder auch in Form von Augmented-Reality-Brillen, eingesetzt werden. Dies kann beispielsweise dazu dienen, einen Fahrer bei der Wahrnehmung seiner Fahraufgabe zu unterstützen. Zudem ist es mittels derartiger elektronischer Datenbrillen auch möglich, dass beispielsweise Beifahrer während der Fahrt mit dem Kraftfahrzeug unterhalten werden können.

Die DE 102 57 963 A1 zeigt ein Verfahren und eine Vorrichtung zur Bestimmung der 3D-Position von PKW-Insassen. Dabei nimmt ein elektromagnetisches Tracking-System eine Kopfposition und Sichtrichtung eines Benutzers auf. Unter anderem erfolgt eine exakte Bestimmung einer 3D-Kopfposition, wobei basierend darauf eine Kopfstütze zur individuellen Optimierung der Insassensicherheit eingestellt wird. In Kenntnis der Augenposition ist es zudem vorgesehen, eine individuelle Einstellung eines Fahrzeugsitzes vorzunehmen.

Die DE 10 2014 009 638 A1 beschreibt ein Verfahren zum Erfassen einer Blickrichtung eines Fahrers in einem Kraftfahrzeug.

Die DE 10 2015 011 589 A1 beschreibt ein Verfahren zum Betreiben einer Virtual-Reality-Brille.

Zudem zeigt die EP 2 883 748 A1 ein Verfahren zur Anzeige von optischen Informationen in Fahrzeugen. In dem Zusammenhang ist es vorgesehen, bei einem Fahrer die Augenposition zu ermitteln. Ferner ist es in dem Zusammenhang auch noch vorgesehen, die Sitzposition des Fahrers abzurufen.

GB 2 410 593 A beschreibt ein Sicherheitssystem für ein Kraftfahrzeug.

Es ist die Aufgabe der vorliegenden Erfindung, eine Möglichkeit bereitzustellen, mittels welcher ein besonders sicherer Betrieb von elektronischen Datenbrillen in Kraftfahrzeugen ermöglicht werden kann.

Diese Aufgabe wird durch ein Verfahren zum Betreiben eines Sicherheitssystems für eine Sitzanlage eines Kraftfahrzeug sowie durch ein Sicherheitssystem für eine Sitzanlage eines Kraftfahrzeugs mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum Betreiben eines Sicherheitssystems für eine Sitzanlage eines Kraftfahrzeugs wird erfasst, ob ein auf einem Fahrzeugsitz der Sitzanlage sitzender Fahrzeuginsasse eine elektronische Datenbrille aufgesetzt hat. Je nach Ausgestaltung beziehungsweise Konfiguration des Kraftfahrzeugs kann die Sitzanlage eine Vielzahl von Fahrzeugsitzen aufweisen oder im Extremfall auch nur einen einzigen Fahrzeugsitz aufweisen. Falls der Fahrzeuginsasse eine elektronische Datenbrille aufgesetzt hat, wird überprüft, ob ein vorgegebener Mindestabstand zwischen dem Fahrzeugsitz und einem Interieurbauteil besteht. Bei der elektronischen Datenbrille kann es sich um beliebige elektronische Datenbrillen handeln, wobei es sich vorzugsweise bei der elektronischen Datenbrille um eine Virtual-Reality-Brille oder auch um eine Augmented-Reality-Brille handelt.

Sollte erfasst werden, dass der Mindestabstand besteht, wird ein Verstellbereich der Sitzanlage derart beschränkt, dass der Mindestabstand nicht unterschritten werden kann. Unter der Beschränkung des Verstellbereichs der Sitzanlage kann eine Beschränkung des Verstellbereichs des Fahrzeugsitzes, auf welchem der Fahrzeuginsasse mit der aufgesetzten elektronischen Datenbrille sitzt, und/oder die Beschränkung eines Verstellbereichs eines anderen Fahrzeugsitzes verstanden werden, auf welchem der betreffende Fahrzeuginsasse mit der aufgesetzten elektronischen Datenbrille gerade nicht sitzt. Wenn hingegen erfasst wird, dass der Mindestabstand nicht besteht, wird der Mindestabstand durch automatisches Verstellen der Sitzanlage hergestellt und/oder eine die Nichteinhaltung des Mindestabstands betreffende Meldung ausgegeben.

Der Grundgedanke des erfindungsgemäßen Verfahrens besteht darin, dass es im Hinblick auf eine hohe Crashsicherheit notwendig sein kann, Maßnahmen bei der Verwendung von solchen elektronischen Datenbrille zu treffen. Sobald erfasst beziehungsweise ermittelt wird, dass ein Fahrzeuginsasse des Kraftfahrzeugs eine elektronische Datenbrille aufgesetzt hat, wird ermittelt und überprüft, ob ein vorgegebener Mindestabstand zwischen dem Fahrzeugsitz, auf welchem der Fahrzeuginsasse mit der aufgesetzten elektronischen Datenbrille sitzt, und einem weiteren Interieurbauteil besteht. Der Mindestabstand ist vorzugsweise bezogen auf die Fahrzeuglängsrichtung vorgegeben. Bei dem Interieurbauteil kann es sich im Wesentlichen um beliebige Bauteile im Fahrzeuginnenraum handeln, welche vor dem betreffenden Fahrzeugsitz angeordnet sind, auf welchem der Fahrzeuginsasse mit der aufgesetzten elektronischen Datenbrille sitzt.

Durch das erfindungsgemäße Verfahren wird sichergestellt, dass der besagte Mindestabstand zwischen dem Fahrzeugsitz der Sitzanlage, auf welchem der Fahrzeuginsasse mit der elektronischen Datenbrille sitzt, und dem besagten Interieurbauteil eingehalten wird. Sollte der Mindestabstand zwischen dem Fahrzeugsitz, auf welchem der Fahrzeuginsasse mit der elektronischen Datenbrille sitzt, und dem Interieurbauteil bestehen, so wird der Verstellbereich der Sitzanlage so beschränkt, dass der Mindestabstand auch nicht unterschritten werden kann. Sollte hingegen festgestellt werden, dass der Mindestabstand nicht besteht, also der Abstand zwischen dem Fahrzeugsitz, auf welchem der Fahrzeuginsasse mit der elektronischen Datenbrille sitzt, und dem besagten Interieurbauteil kleiner als der Mindestabstand sein, so erfolgt eine automatische Verstellung der Sitzanlage zum Herstellen des Mindestabstands und/oder die Ausgabe einer die Nichteinhaltung des Mindestabstands betreffende Meldung.

Der Mindestabstand kann beispielsweise bezogen auf eine Lehne des Fahrzeugsitzes und dem betreffenden Interieurbauteil vorgegeben sein. Alternativ oder zusätzlich ist es beispielsweise auch möglich, dass beispielsweise eine Vorderkante einer Sitzfläche des Fahrzeugsitzes als Referenzpunkt gewählt wird, an welchem der Mindestabstand zwischen dem besagten Interieurbauteil und dem Fahrzeugsitz festgemacht wird.

Mittels des erfindungsgemäßen Verfahrens kann sichergestellt werden, dass ein Träger einer elektronischen Datenbrille insbesondere im Crashfall oder auch bei einem starken Abbremsvorgang nicht aufgrund der aufgesetzten elektronischen Datenbrille verletzt wird. Dies wird dadurch sichergestellt, dass der besagte Mindestabstand zwischen dem Fahrzeugsitz und dem Interieurbauteil sichergestellt wird, was sich auch auf den Abstand zwischen der elektronischen Datenbrille und dem Interieurbauteil auswirkt. So kann beispielsweise vermieden werden, dass der Träger der elektronischen Datenbrille beim Auslösen eines Airbags und aufgrund der aufgesetzten elektronischen Datenbrille in Mitleidenschaft gezogen wird. Beispielsweise ist es auch möglich, dass verhindert wird, dass der Fahrzeuginsasse, der die elektronische Datenbrille aufgesetzt hat, bei einem starken Bremsvorgang oder in einem Crashfall mit der elektronischen Datenbrille auf ein Interieurbauteil, beispielsweise eine Rücksitzlehne eines Vordersitzes aufschlägt, wenn der Träger der elektronischen Datenbrille gerade im Fontbereich sitzen sollte.

Eine vorteilhafte Ausführungsform der Erfindung sieht vor, dass falls es sich bei dem Fahrzeugsitz um einen Vordersitz handelt, der Mindestabstand sich auf einen Abstand zwischen dem Vordersitz und einem Armaturenbrett mit einem darin integrierten Airbag bezieht. Bei dieser vorteilhaften Ausführungsform liegt der Erfindung die Erkenntnis zugrunde, dass elektronische Datenbrillen üblicherweise den Kopf des Trägers einer derartigen elektronischen Datenbrille in Fahrzeuglängsrichtung nach vorne verlängern. So kann eine Art definierter Öffnungslevel eines Airbags beispielsweise gewährleistet werden, also anders ausgedrückt ein Öffnungsbereich des betreffenden Airbags nicht ungünstig durch die aufgesetzte elektronische Datenbrille beeinträchtigt werden. Im Falle eines Vordersitzes wird also sichergestellt, dass der Träger der elektronischen Datenbrille nicht so nah am Armaturenbrett mit dem darin integrierten Airbag sitzt. Eine besonders zuverlässige Funktionsweise des Airbags ohne dass der Träger der elektronischen Datenbrille beim Auslösen des Airbags in Mitleidenschaft gezogen wird, kann dadurch sichergestellt werden.

Eine weitere vorteilhafte Ausführungsform der Erfindung sieht vor, dass wenn der Mindestabstand besteht, ein Verstellbereich des Vordersitzes derart beschränkt wird, dass der Mindestabstand zwischen dem Vordersitz und dem Armaturenbrett nicht unterschritten werden kann. Handelt es sich bei dem Vordersitz beispielsweise um einen elektrisch verstellbaren Sitz, so kann der Verstellbereich des Vordersitzes bezüglich der Verstellbarkeit in Fahrzeuglängsrichtung und/oder einer Lehnenneigung des Vordersitzes einfach elektronisch so beschränkt werden, dass der Mindestabstand zwischen dem Vordersitz und dem Armaturenbrett nicht unterschritten werden kann. Handelt es sich dagegen um einen Fahrzeugsitz, welcher nur manuell verstellt werden kann, so können elektronisch beziehungsweise elektrisch verstellbare Blockierelemente beispielsweise vorgesehen werden, welche ein Verschieben des Vordersitzes in Fahrzeuglängsrichtung und/oder ein Verstellen einer Lehnenneigung des Vordersitzes so einschränken, dass der Mindestabstand zwischen dem Vordersitz und dem Armaturenbrett ebenfalls nicht unterschritten werden kann.

Gemäß einer weiteren vorteilhaften Ausführungsform der Erfindung ist es vorgesehen, dass wenn der Mindestabstand unterschritten worden ist, der Vordersitz derart automatisch verstellt wird, dass der Mindestabstand zwischen dem Vordersitz und dem Armaturenbrett hergestellt wird und/oder eine die Nichteinhaltung des Mindestabstands betreffende Meldung ausgegeben wird. Sollte der Vordersitz elektrisch verstellbar sein, so kann dieser besonders einfach automatisch verstellt werden, beispielsweise indem der Vordersitz in Fahrzeuglängsrichtung entsprechend zurückgeschoben und/oder eine Lehnenneigung des Vordersitzes so eingestellt wird, dass zumindest der Mindestabstand zwischen dem Vordersitz und dem Armaturenbrett hergestellt wird. Alternativ oder zusätzlich kann auch eine die Nichteinhaltung des Mindestabstands zwischen dem Vordersitz und dem Armaturenbrett betreffende Meldung ausgegeben werden. Beispielsweise kann die Meldung mittels der elektronischen Datenbrille selbst ausgegeben werden, sodass der Träger der elektronischen Datenbrille direkt über den Umstand informiert wird, dass der empfohlene Mindestabstand zwischen dem Vordersitz und dem Armaturenbrett aktuell nicht besteht. Natürlich kann alternativ oder zusätzlich auch eine entsprechende akustische Meldung ausgegeben werden.

In weiterer vorteilhafte Ausgestaltung der Erfindung ist es vorgesehen, dass falls es sich bei dem Fahrzeugsitz um einen Rücksitz handelt, der Mindestabstand sich auf einen Abstand zwischen dem Rücksitz und einer Rückenlehne eines davor angeordneten Vordersitzes bezieht. In dem Fall geht es gar nicht darum, dass ein Öffnungsbereich eines Airbags durch die aufgesetzte elektronische Datenbrille nicht ungünstig beeinflusst wird. Stattdessen geht es hier darum, dass der Träger der elektronischen Datenbrille, welcher auf dem Rücksitz sitzt, bei einem starken Bremsvorgang oder auch im Crashfall mit der aufgesetzten elektronischen Datenbrille nicht gegen die Rückenlehne des vor ihm befindlichen Vordersitzes stößt. Auch in den Fällen, in welchen der Fahrzeuginsasse, der die elektronische Datenbrille aufgesetzt hat, also auf dem Rücksitz platzgenommen hat, kann sichergestellt werden, dass der Mindestabstand zwischen dem betreffenden Rücksitz und einer davor befindlichen Rückenlehne sichergestellt werden kann.

In weiterer vorteilhafter Ausgestaltung der Erfindung ist es vorgesehen, dass wenn der Mindestabstand besteht, ein Verstellbereich des Vordersitzes derart beschränkt wird, dass der Mindestabstand zwischen der Rückenlehne des Vordersitzes und dem Rücksitz nicht unterschritten werden kann. In dem Fall wird also gar nicht der Sitz verstellt, auf welchem der Träger der elektronischen Datenbrille sitzt. Stattdessen wird der Vordersitz im Hinblick auf seinen Verstellbereich so beschränkt, dass der Mindestabstand zwischen der Rückenlehne des Vordersitzes und dem Rücksitz, auf welchem der Träger der elektronischen Datenbrille sitzt, nicht unterschritten werden kann. Der Verstellbereich kann wiederum auf den Verstellbereich in Fahrzeuglängsrichtung und/oder auch auf den Verstellbereich im Hinblick auf eine Neigung der Rückenlehne des Vordersitzes bezogen sein.

Eine weitere vorteilhafte Ausführungsform der Erfindung sieht vor, dass wenn der Mindestabstand unterschritten worden ist, der Vordersitz derart automatisch verstellt wird, dass der Mindestabstand zwischen der Rückenlehne des Vordersitzes und dem Rücksitz hergestellt und/oder eine die Nichteinhaltung des Mindestabstands betreffende Meldung ausgegeben wird. Für den Fall, dass der Träger der elektronischen Datenbrille also auf dem Rücksitz platzgenommen hat, ist es vorgesehen, dass nicht der Rücksitz als solcher bei Unterschreitung des Mindestabstands verstellt wird. Stattdessen wird einfach der vor dem Rücksitz, auf welchem der Träger der elektronischen Datenbrille platzgenommen hat, befindliche Vordersitz derart automatisch verstellt, dass der Mindestabstand zwischen der Rückenlehne des Vordersitzes und dem Rücksitz hergestellt wird. Alternativ oder zusätzlich ist es wiederum auch möglich, dass eine die Nichteinhaltung des Mindestabstands betreffende Meldung ausgegeben wird. In den Fällen, in welchen der Verstellbereich des Vordersitzes, auf welchem der Träger der elektronischen Datenbrille gerade nicht sitzt, beschränkt oder automatisch verstellt wird, ist es vorzugsweise vorgesehen, dass über geeignete Ausgabemittel im Kraftfahrzeug ein entsprechender Hinweis darauf auch im vorderen Bereich des Kraftfahrzeugs ausgegeben wird. Handelt es sich bei dem Vordersitz beispielsweise um einen Beifahrersitz, so kann ein Beifahrer dadurch auf einfache Weise darüber in Kenntnis gesetzt werden, dass der Verstellbereich seines Sitzes gerade beschränkt worden ist oder das sein Sitz gleich beispielsweise automatisch verstellt werden wird, um den besagten Mindestabstand zwischen der Rückenlehne des Vordersitzes und dem Rücksitz herzustellen.

Gemäß einer weiteren vorteilhaften Ausführungsform der Erfindung ist es vorgesehen, dass solange der Mindestabstand nicht besteht, die elektronische Datenbrille abgesehen von einer Möglichkeit, die Nichteinhaltung des Mindestabstands betreffende Meldung auszugeben, deaktiviert wird. Der Träger der elektronischen Datenbrille kann diese also schlichtweg einfach gar nicht verwenden, da diese gar nicht betrieben werden kann, solange der Mindestabstand nicht besteht. Sollte also der Mindestabstand nicht eingestellt werden können oder sollten die Fahrzeuginsassen aus welchen Gründen auch immer gerade nicht wollen, dass die Sitzanlage entsprechend verstellt wird, so kann der Träger der elektronischen Datenbrille diese auch nicht benutzten und wird sie höchstwahrscheinlich dann auch absetzen. Dadurch kann die Crashsicherheit bei aufgesetzter elektronischer Datenbrille ebenfalls erhöht werden, weil die elektronische Datenbrille höchstwahrscheinlich nur dann aufgesetzt bleibt, wenn der besagte Mindestabstand auch besteht.

Eine weitere vorteilhafte Ausführungsform der Erfindung sieht vor, dass nachdem der Fahrzeuginsasse die elektronische Datenbrille im Kraftfahrzeug aufgesetzt hat, mittels der elektronischen Datenbrille abgefragt wird, wo der Fahrzeuginsasse sitzt. Der Fahrzeuginsasse kann dann beispielsweise sprachbasiert oder auf beliebige andere Weise angeben, auf welchem Fahrzeugsitz der Sitzanlage er gerade Platzgenommen hat. In dem Fall muss gar nicht erst aufwändig bestimmt werden, wo der Träger der elektronischen Datenbrille sitzt, da dies der Träger der elektronischen Datenbrille aufgrund der automatischen Abfrage selbst mitteilen wird.

In weiterer vorteilhafte Ausgestaltung der Erfindung ist es vorgesehen, dass mittels eines Kamerasystems erfasst wird, ob der Fahrzeuginsasse eine elektronische Datenbrille aufgesetzt hat. Dadurch kann auf einfache und zuverlässige Weise bestimmt werden, ob der Fahrzeuginsasse auch tatsächlich gerade eine elektronische Datenbrille trägt.

In weiterer vorteilhafter Ausgestaltung der Erfindung ist es vorgesehen, das der Mindestabstand in Abhängigkeit von einer Größe des Fahrzeuginsassen, insbesondere in Abhängigkeit von einer Länge eines Oberkörpers des Fahrzeuginsassen, individuell vorgegeben wird. Sollte beispielsweise der Fahrzeuginsasse relativ kurze Beine bei einem relativ langen Oberkörper haben, so wird er unter Umständen seine Fahrzeugsitz relativ weit nach vorne schieben. Denn allzu viel Beinfreiheit wird er nicht benötigen. Allerdings kann die Sitzpositionierung bei relativ langem Oberkörper unter Umständen ungünstig im Hinblick auf die Crashsicherheit bei aufgesetzter elektronischer Datenbrille sein. Wenn der Mindestabstand in Abhängigkeit von der Größe des Fahrzeuginsassen, insbesondere in Abhängigkeit von der Länge seines Oberkörpers, individuell vorgegeben wird, kann auf besonders zuverlässige Weise sichergestellt werden, dass der betreffende Fahrzeuginsasse, der die elektronische Datenbrille aufgesetzt hat, den für ihn erforderlichen Mindestabstand bei aufgesetzter elektronischer Datenbrille zu vor ihm liegenden Interieurbauteilen einhält.

In weiterer vorteilhafte Ausgestaltung der Erfindung ist es vorgesehen, dass die automatische Verstellung der Sitzanlage erst erfolgt, nachdem diese manuell bestätigt worden ist. Erfolgt beispielsweise die Verstellung des Fahrzeugsitzes, auf dem der Träger der elektronischen Datenbrille selbst sitzt, so kann es erforderlich sein, dass der Träger der elektronischen Datenbrille die automatische Verstellung seines Fahrzeugsitzes zur Herstellung des Mindestabstands vorher bestätigen muss. Die Bestätigung kann beispielsweise durch einen Sprachbefehl, durch Betätigung von Tasten, durch Ausführung einer Geste oder dergleichen erfolgen. Ist hingegen vorgesehen, dass beispielsweise der Vordersitz verstellt wird, während der Träger der elektronischen Datenbrille auf dem Rücksitz sitzt, so kann es vorgesehen sein, dass die auf dem Vordersitz sitzende Person die automatische Verstellung ihres Sitzes erst bestätigen muss. Beispielsweise kann es vorgesehen sein, dass eine vom Vordersitz aus gut erreichbare Taste betätigt werden muss. Alternativ oder zusätzlich kann es beispielsweise auch vorgesehen sein, dass ein Sprachkommando von der auf dem Vordersitz sitzenden Person ausgesprochen werden muss, wobei beispielsweise mittels eines Kamerasystems überprüft werden kann, ob auch tatsächlich die auf dem Vordersitz sitzende Person den Sprachbefehl geäußert hat. Dadurch, dass vorzugsweise die automatische Verstellung der Sitzanlage erst erfolgt, nachdem diese manuell bestätigt worden ist, kann sichergestellt werden, dass die jeweiligen Fahrzeuginsassen, welche auf dem betreffenden Fahrzeugsitz der Sitzanlage sitzen, der verstellt werden soll, nicht überrascht oder im schlimmsten Fall sogar durch die automatische Verstellung der Sitzanlage verletzt werden.

Das erfindungsgemäße Sicherheitssystem für eine Sitzanlage eines Kraftfahrzeugs umfasst eine Erfassungseinrichtung, welche dazu ausgelegt ist, zu erfassen, ob ein auf einem Fahrzeugsitz der Sitzanlage sitzender Fahrzeuginsasse eine elektronische Datenbrille aufgesetzt hat. Des Weiteren weist das Sicherheitssystem eine Steuereinrichtung auf, welche dazu ausgelegt ist, zu überprüfen, ob ein vorgegebener Mindestabstand zwischen dem Fahrzeugsitz und einem Interieurbauteil besteht, falls der Fahrzeuginsasse eine elektronische Datenbrille aufgesetzt hat. Des Weiteren ist die Steuereinrichtung dazu ausgelegt, einen Verstellbereich der Sitzanlage derart zu beschränken, dass der Mindestabstand nicht unterschritten werden kann, wenn der Mindestabstand besteht. Zudem ist die Steuereinrichtung dazu ausgelegt, den Mindestabstand durch automatisches Verstellen der Sitzanlage herzustellen und/oder eine die Nichteinhaltung des Mindestabstands betreffende Meldung auszugeben, wenn der Mindestabstand nicht besteht. Vorteilhafte Ausgestaltungen des erfindungsgemäßen Verfahrens sind als vorteilhafte Ausgestaltungen des erfindungsgemäßen Sicherheitssystems und umgekehrt anzusehen, wobei das Sicherheitssystem insbesondere Mittel zur Durchführung der Verfahrensschritte aufweist.

Das erfindungsgemäße Kraftfahrzeug umfasst das erfindungsgemäße Sicherheitssystem oder eine vorteilhafte Ausführungsform des erfindungsgemäßen Sicherheitssystems.

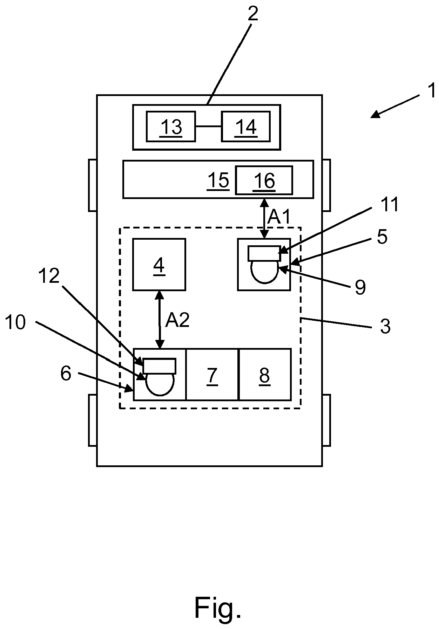

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Fig. ein Kraftfahrzeug mit einem Sicherheitssystem für eine Sitzanlage eines Kraftfahrzeugs, welches dazu ausgelegt ist, einen besonders sicheren Betrieb von elektronischen Datenbrillen im Fahrzeuginnenraum zu gewährleisten.

Ein Kraftfahrzeug 1 ist in einer stark schematisierten Darstellung in der einzigen Fig. gezeigt. Das Kraftfahrzeug 1 umfasst ein Sicherheitssystem 2 für eine Sitzanlage 3 des Kraftfahrzeugs 1. Im vorliegend gezeigten Ausführungsbeispiel umfasst die Sitzanlage 3 einen Fahrersitz 4, einen Beifahrersitz 5 und noch drei Rücksitze 6, 7, 8. Ein Beifahrer 9 und ein weiterer Mitfahrer 10 haben jeweils eine elektronische Datenbrille 11, 12 aufgesetzt. Das Sicherheitssystem 1 dient dazu, eine besonders sichere Benutzung der elektronischen Datenbrillen 11, 12 im Kraftfahrzeug 1 zu ermöglichen.

Um dies zu gewährleisten umfasst das Sicherheitssystem 2 eine Erfassungseinrichtung 13, welche dazu ausgelegt ist, zu erfassen, ob die jeweiligen Fahrzeuginsassen 9, 10 die elektronischen Datenbrillen 11, 12 aufgesetzt haben. Zudem umfasst das Sicherheitssystem 2 eine Steuereinrichtung 14, welche dazu ausgelegt ist, zu überprüfen, ob ein jeweils vorgegebener Mindestabstand A1 beziehungsweise A2 zwischen dem jeweiligen Fahrzeugsitz 5 beziehungsweise 6 und einem jeweiligen Interieurbauteil besteht, falls die jeweiligen Fahrzeuginsassen 9, 10 die elektronischen Datenbrillen 11, 12 aufgesetzt haben. Die Steuereinrichtung 14 kann einen Verstellbereich der Sitzanlage 3 derart beschränken, das jeweilige Mindestabstände A1, A2 nicht unterschritten werden, wenn festgestellt wird, dass die jeweiligen Mindestabstände A1 beziehungsweise A2 gerade bestehen. Zudem kann die Steuereinrichtung 14 die jeweiligen Mindestabstände A1, A2 durch automatisches Verstellen der Sitzanlage 3 herstellen und/oder zumindest eine die Nichteinhaltung der jeweiligen Mindestabstände A1, A2 betreffenden Meldungen ausgeben, wenn denn die Mindestabstände A1 beziehungsweise A2 nicht bestehen sollten.

Für den Beifahrer 9 bedeutet dies konkret, dass sich der Mindestabstand A1 auf einen Abstand zwischen dem Beifahrersitz 5 und einem Armaturenbrett 15 bezieht, in welchem ein Airbag 16 integriert ist. Bei aufgesetzter elektronischer Datenbrille 11 wird also überwacht, ob der Beifahrersitz 5 so eingestellt ist, dass der besagte Mindestabstand A1 zum Armaturenbrett 15 eingehalten wird. Sollte festgestellt werden, dass dieser Mindestabstand A1 besteht, wird ein Verstellbereich des Beifahrersitzes 5 derart beschränkt, dass der Mindestabstand A1 zwischen dem Beifahrersitz 5 und dem Armaturenbrett 15 nicht unterschritten werden kann. Kann der Beifahrersitz 5 beispielsweise vollelektrisch verstellt werden, so kann es vorgesehen sein, dass der Beifahrersitz 5 nicht mehr ganz nach vorne in Fahrzeuglängsrichtung verschoben werden und/oder eine hier nicht näher bezeichnete Rückenlehne des Beifahrersitzes 5 nicht beliebig nach vorne geschwenkt werden kann.

Sollte hingegen mittels der Erfassungseinrichtung 13 festgestellt werden, dass der Mindestabstand A1 unterschritten worden ist, also nicht besteht, wird der Beifahrersitz 5 durch entsprechende Ansteuerung mittels der Steuereinrichtung 14 vorzugsweise automatisch verstellt, um den Mindestabstand A1 zwischen dem Beifahrersitz 5 und dem Armaturenbrett 15 herzustellen. Alternativ oder zusätzlich ist es auch möglich, dass wenn der Mindestabstand A1 nicht bestehen sollte, eine die Nichteinhaltung dieses Mindestabstands A1 betreffende Meldung ausgegeben wird. Die Meldung kann beispielsweise über die elektronische Datenbrille 5 ausgegeben werden, sodass der Beifahrer 9 dies direkt erkennen kann. Dies kann beispielsweise rein informatorischen Charakter haben. Aber es kann auch genauso gut möglich sein, dass der Beifahrersitz 5 gar nicht elektrisch verstellbar und somit auch nicht automatisch verstellbar ist. In dem Fall dient eine solche Ausgabe der Meldung dazu, den Beifahrer 9 dazu anzuhalten, den Beifahrersitz 9 so zu verstellen, dass der Mindestabstand A1 zumindest gewahrt wird.

Bei dem auf dem Rücksitz 6 sitzenden Mitfahrer 10 geht es nicht darum, dass sich ein Airbag besonders gut und unkritisch bei der aufgesetzten elektronischen Datenbrille 12 entfalten kann. Stattdessen geht es hier vielmehr darum, dass der Fahrzeuginsasse 10 bei aufgesetzter elektronischer Datenbrille 12 und einem starken Bremsvorgang oder in einem Crashfall nicht mit der aufgesetzten elektronischen Datenbrille 12 mit einer nicht näher bezeichneten Rückenlehne des Fahrersitzes 4 kollidiert. Wird festgestellt, dass der Mindestabstand A2 zwischen dem Rücksitz 6 und einer nicht näher bezeichneten Rückenlehne des davor angeordneten Vordersitzes 4 besteht, wird der Fahrersitz 4 vorzugsweise automatisch verstellt, um den Mindestabstand A2 herzustellen. Dies kann beispielsweise durch alleiniges Verrücken des Vordersitzes 4 nach vorne und/oder auch durch eine entsprechende Anpassung der Lehnenneigung des Rücksitzes des Fahrersitzes 4 erfolgen. Sollte hingegen festgestellt werden, dass der Mindestabstand A2 zwischen dem Rücksitz 6 und der Rückenlehne des Fahrersitzes 4 gegeben sein sollte, so wird der Verstellbereich des Fahrersitzes 4 derart beschränkt, dass der Mindestabstand A2 zwischen der Rückenlehne des Fahrersitzes 4 und dem Rücksitz 6 auch nicht unterschritten werden kann.

Solange die Mindestabstände A1, A2 nicht bestehen, werden die elektronischen Datenbrillen 11, 12 abgesehen von einer Möglichkeit, die Nichteinhaltung der jeweiligen Mindestabstände A1, A2 anzuzeigen, deaktiviert. Die Fahrzeuginsassen 9, 10, können also die aufgesetzten elektronischen Datenbrillen 11, 12 gar nicht nutzen, beispielsweise um sich Filme anzeigen zu lassen, andere Medieninhalte zu genießen oder dergleichen, solange nicht sichergestellt ist, dass jeweilige Mindestabstände A1, A2 eingehalten werden.

Um auf besonders einfache Weise erkennen zu können, ob die Fahrzeuginsassen 9, 10 die elektronischen Datenbrillen 11, 12 aufgesetzt haben, kann es vorgesehen sein, dass die elektronischen Datenbrillen 11, 12 automatisch abfragen, wo der jeweilige Fahrzeuginsasse 9, 10 sitzt, sobald dieser die betreffende elektronische Datenbrille 11 beziehungsweise 12 aufgesetzt hat. Alternativ oder zusätzlich ist es auch möglich, dass ein Kamerasystem eingesetzt wird, um zu erfassen, ob die Fahrzeuginsassen 9, 10 die elektronischen Datenbrillen 11 beziehungsweise 12 aufgesetzt haben.

Die Mindestabstände A1, A2 können zudem in Abhängigkeit von einer jeweiligen Größe der Fahrzeuginsassen 9, 10, insbesondere in Abhängigkeit von einer Länge ihrer Oberkörper, individuell vorgegeben werden. Im Falle der auf dem Beifahrersitz 5 sitzenden Person 9 kann dadurch sichergestellt werden, dass der Airbag 16 sich unkritisch trotz aufgesetzter elektronischer Datenbrille 11 entfalten und so den optimalen Schutz für den Beifahrer 9 sicherstellen kann. Im Falle des auf dem Rücksitz 6 sitzenden Fahrzeuginsassen 10 kann abgestimmt auf seine Größe, insbesondere abgestimmt auf die Länge seines Oberkörpers, sichergestellt werden, dass er bei Einhaltung des Mindestabstands A2 definitiv auch bei einem starken Bremsmanöver oder im Crashfall nicht mit der elektronischen Datenbrille 12 rückseitig mit dem Fahrersitz 4 kollidiert.

Die automatische Verstellung der Sitzanlage 5 erfolgt vorzugsweise immer erste dann, nachdem diese manuell bestätigt worden ist. Bei dem Beifahrersitz 5 kann dies beispielsweise bedeuten, dass die Person 9 erst manuell bestätigen muss, dass der Beifahrersitz 5 auch so verstellt werden darf, dass der Mindestabstand A1 - sofern er gerade nicht eingehalten wird - auch hergestellt wird. Im Falle der auf dem Rücksitz 6 sitzenden Person kann das mit der Bestätigung wiederum bedeuten, dass ein hier nicht dargestellter Fahrer zunächst darüber in Kenntnis gesetzt wird, dass der Fahrersitz 4 verstellt werden sollte, wobei in dem Fall der Fahrer erste bestätigen muss, dass sein Fahrersitz 4 auch tatsächlich automatisch so verstellt werden darf, dass der Mindestabstand A2 hergestellt wird. Insbesondere im letzten Fall kann dies natürlich sicherheitskritisch sein, weil der Fahrersitz 4 idealer Weise nur dann verstellt werden sollte, wenn dies der Fahrer erstens weiß und zweitens auch gerade zulassen möchte. So oder so kann durch das Bestätigungserfordernis vor Verstellung der Sitzanlage 5 sichergestellt werden, das die betreffenden Personen, welche auf den zu verstellenden Sitzen 5 beziehungsweise 4 sitzen, darüber in Kenntnis gesetzt werden, dies bestätigen müssen und dementsprechend auch nicht überrascht oder im Extremfall sogar verletzt werden.

Mittels des erläuterten Sicherheitssystems 2 und der erläuterten Vorgehensweise beim Betreiben des Sicherheitssystems 2 kann auf einfache und zuverlässige Weise ein besonders sicherer Betrieb beziehungsweise eine besonders sichere Verwendung von elektronischen Datenbrillen 11, 12 im Fahrzeuginnenraum eines Kraftfahrzeugs 1 sichergestellt werden.

## Patentansprüche

1. Verfahren zum Betreiben eines Sicherheitssystems (2) für eine Sitzanlage (3) eines Kraftfahrzeugs (1), mit den Schritten:
- Erfassen, ob ein auf einem Fahrzeugsitz (5, 6) der Sitzanlage (3) sitzender Fahrzeuginsasse (9, 10) eine elektronische Datenbrille (11, 12) aufgesetzt hat;
- falls der Fahrzeuginsasse (9, 10) eine elektronische Datenbrille (11, 12) aufgesetzt hat: Überprüfen, ob ein vorgegebener Mindestabstand (A1, A2) zwischen dem Fahrzeugsitz (5, 6) und einem Interieurbauteil (15, 4) besteht;
- wenn der Mindestabstand (A1, A2) besteht: Beschränken eines Verstellbereichs der Sitzanlage (3) derart, dass der Mindestabstand (A1, A2) nicht unterschritten werden kann;
- wenn der Mindestabstand (A1, A2) nicht besteht: Herstellen des Mindestabstands (A1, A2) durch automatisches Verstellen der Sitzanlage (3) und/oder Ausgeben einer die Nichteinhaltung des Mindestabstands (A1, A2) betreffenden Meldung.

2. Verfahren nach Anspruch 1,
**dadurch gekennzeichnet, dass**
falls es sich bei dem Fahrzeugsitz um einen Vordersitz (5) handelt, der Mindestabstand (A1) sich auf einen Abstand zwischen dem Vordersitz (5) und einem Armaturenbrett (15) mit einem darin integrierten Airbag (16) bezieht.

3. Verfahren nach Anspruch 2,
**dadurch gekennzeichnet, dass**
wenn der Mindestabstand (A1) besteht, ein Verstellbereich des Vordersitzes (5) derart beschränkt wird, dass der Mindestabstand (A1) zwischen dem Vordersitz (5) und dem Armaturenbrett (15) nicht unterschritten werden kann.

4. Verfahren nach Anspruch 2 oder 3,
**dadurch gekennzeichnet, dass**
wenn der Mindestabstand (A1) unterschritten worden ist, der Vordersitz (5) derart automatisch verstellt wird, dass der Mindestabstand (A1) zwischen dem Vordersitz (5) und dem Armaturenbrett (15) hergestellt wird und/oder eine die Nichteinhaltung des Mindestabstands (A1) betreffende Meldung ausgegeben wird.

5. Verfahren nach einem der vorhergehenden Ansprüche,
**dadurch gekennzeichnet, dass**
falls es sich bei dem Fahrzeugsitz um einen Rücksitz (6) handelt, der Mindestabstand (A2) sich auf einen Abstand zwischen dem Rücksitz (6) und einer Rückenlehne eines davor angeordneten Vordersitzes (4) bezieht.

6. Verfahren nach Anspruch 5,
**dadurch gekennzeichnet, dass**
wenn der Mindestabstand (A2) besteht, ein Verstellbereich des Vordersitzes (4) derart beschränkt wird, dass der Mindestabstand (A2) zwischen der Rückenlehne des Vordersitzes (4) und dem Rücksitz (6) nicht unterschritten werden kann.

7. Verfahren nach Anspruch 5 oder 6,
**dadurch gekennzeichnet, dass**
wenn der Mindestabstand (A2) unterschritten worden ist, der Vordersitz (4) derart automatisch verstellt wird, dass der Mindestabstand (A2) zwischen der Rückenlehne des Vordersitzes (4) und dem Rücksitz (6) hergestellt und/oder eine die Nichteinhaltung des Mindestabstands (A2) betreffende Meldung ausgegeben wird.

8. Verfahren nach einem der vorhergehenden Ansprüche,
**dadurch gekennzeichnet, dass**
solange der Mindestabstand (A1, A2) nicht besteht, die elektronische Datenbrille (11, 12) abgesehen von einer Möglichkeit, die Nichteinhaltung des Mindestabstands (A1, A2) betreffende Meldung auszugeben, deaktiviert wird.

9. Verfahren nach einem der vorhergehenden Ansprüche,
**dadurch gekennzeichnet, dass**
nachdem der Fahrzeuginsasse (9, 10) die elektronische Datenbrille (11, 12) im Kraftfahrzeug (1) aufgesetzt hat, mittels der elektronischen Datenbrille (11, 12) abgefragt wird, wo der Fahrzeuginsasse (9, 10) sitzt.

10. Verfahren nach einem der vorhergehenden Ansprüche,
**dadurch gekennzeichnet, dass**
mittels eines Kamerasystems erfasst wird, ob der Fahrzeuginsasse (9, 10) eine elektronische Datenbrille (11, 12) aufgesetzt hat.

11. Verfahren nach einem der vorhergehenden Ansprüche,
**dadurch gekennzeichnet, dass**
der Mindestabstand (A1, A2) in Abhängigkeit von einer Größe des Fahrzeuginsassen (9, 10), insbesondere in Abhängigkeit von einer Länge eines Oberkörpers des Fahrzeuginsassen (9, 10), individuell vorgegeben wird.

12. Verfahren nach einem der vorhergehenden Ansprüche,
**dadurch gekennzeichnet, dass**
die automatische Verstellung der Sitzanlage (3) erst erfolgt, nachdem diese manuell bestätigt worden ist.

13. Sicherheitssystem (2) für eine Sitzanlage (3) eines Kraftfahrzeugs (1), umfassend eine Erfassungseinrichtung (13), welche dazu ausgelegt ist, zu erfassen, ob ein auf einem Fahrzeugsitz (5, 6) der Sitzanlage (3) sitzender Fahrzeuginsasse (9, 10) eine elektronische Datenbrille (11, 12) aufgesetzt hat, und eine Steuereinrichtung (14), welche dazu ausgelegt ist,
- zu überprüfen, ob ein vorgegebener Mindestabstand (A1, A2) zwischen dem Fahrzeugsitz (5, 6) und einem Interieurbauteil (15, 4) besteht, falls der Fahrzeuginsasse (9, 10) eine elektronische Datenbrille (11, 12) aufgesetzt hat;
- einen Verstellbereich der Sitzanlage (3) derart zu beschränken, dass der Mindestabstand (A1, A2) nicht unterschritten werden kann, wenn der Mindestabstand (A1, A2) besteht;
- den Mindestabstand (A1, A2) durch automatisches Verstellen der Sitzanlage (3) herzustellen und/oder eine die Nichteinhaltung des Mindestabstands (A1, A2) betreffende Meldung auszugeben, wenn der Mindestabstand (A1, A2) nicht besteht.

14. Kraftfahrzeug (1) mit einem Sicherheitssystem (2) nach Anspruch 13.

## Claims

1. Method for operating a safety system (2) for a seat system (3) of a motor vehicle (1), comprising the steps:
- detecting whether a vehicle occupant (9, 10) seated on a vehicle seat (5, 6) of the seat system (3) has put on a pair of electronic data glasses (11, 12);
- in the event that the vehicle occupant (9, 10) has put on a pair of electronic data glasses (11, 12): checking whether there is a predefined minimum distance (A1, A2) between the vehicle seat (5, 6) and an internal component (15, 4);
- if the minimum distance (A1, A2) is present: restricting an adjustment range of the seat system (3) in such a way that the minimum distance (A1, A2) cannot be fallen short of;
- if the minimum distance (A1, A2) is not present: producing the minimum distance (A1, A2) by automatic adjustment of the seat system (3) and/or outputting a notification regarding the non-compliance with the minimum distance (A1, A2).

2. Method according to claim 1,
**characterised in that**
in the event that the vehicle seat is a front seat (5), the minimum distance (A1, A2) relates to a distance between the front seat (5) and a dashboard (15) with an airbag (16) integrated therein.

3. Method according to claim 2,
**characterised in that**
if the minimum distance (A1) is present, an adjustment range of the front seat (5) is restricted in such a way that the minimum distance (A1) between the front seat (5) and the dashboard (15) cannot be fallen short of.

4. Method according to claim 2 or 3,
**characterised in that**
if the minimum distance (A1) has been fallen short of, the front seat (5) is automatically adjusted in such a way that the minimum distance (A1) between the front seat (5) and the dashboard (15) is produced and/or a notification regarding the non-compliance with the minimum distance (A1) is output.

5. Method according to one of the preceding claims,
**characterised in that**
in the event that the vehicle seat is a rear set (6), the minimum distance (A2) relates to a distance between the rear seat (6) and a backrest of a front seat (4) arranged in front thereof.

6. Method according to claim 5,
**characterised in that**
if the minimum distance (A2) is present, an adjustment range of the front seat (4) is restricted in such a way that the minimum distance (A2) between the backrest of the front seat (4) and the rear seat (6) cannot be fallen short of.

7. Method according to claim 5 or 6,
**characterised in that**
if the minimum distance (A2) has been fallen short of, the front seat (4) is automatically adjusted in such a way that the minimum distance (A2) between the backrest of the front seat (4) and the rear seat (6) is produced and/or a notification regarding the non-compliance with the minimum distance (A2) is output.

8. Method according to one of the preceding claims,
**characterised in that**
as long as the minimum distance (A1, A2) is not present, the pair of electronic data glasses (11, 12) is, apart from the possibility of outputting the notification regarding the non-compliance with the minimum distance (A1, A2), deactivated.

9. Method according to one of the preceding claims,
**characterised in that**
after the vehicle occupant (9, 10) has put on the pair of electronic data glasses (11, 12) in the motor vehicle (1), a request is made by means of the pair of electronic data glasses (11, 12) as to where the vehicle occupant (9, 10) is sitting.

10. Method according to one of the preceding claims,
**characterised in that**
whether the vehicle occupant (9, 10) has put on a pair of electronic data glasses (11, 12) is detected by means of a camera system.

11. Method according to one of the preceding claims,
**characterised in that**
the minimum distance (A1, A2) is individually predefined as a function of the size of the vehicle occupant (9, 10), in particular as a function of the length of an upper body of the vehicle occupant (9, 10).

12. Method according to one of the preceding claims,
**characterised in that**
the automatic adjustment of the seat system (3) occurs only after it has been manually confirmed.

13. Safety system (2) for a seat system (3) of a motor vehicle (1), comprising a detection apparatus (13) which is adapted to detect whether a vehicle occupant (9, 10) sitting on a vehicle seat (5, 6) of the seat system (3) has put on a pair of electronic data glasses (11, 12), and a control apparatus (14) which is adapted
- to check whether a predefined minimum distance (A1, A2) between the vehicle seat (5, 6) and an internal component (15, 4) is present, in the event that the vehicle occupant (9, 10) has put on a pair of electronic data glasses (11, 12);
- to restrict an adjustment range of the seat system (3) in such a way that the minimum distance (A1, A2) cannot be fallen sho- rt of, if the minimum distance (A1, A2) is present;
- to produce the minimum distance (A1, A2) by automatic adjustment of the seat system (3) and/or to output outputting a notification regarding the non-compliance with the minimum distance (A1, A2), if the minimum distance (A1, A2) is not present.

14. Motor vehicle (1) comprising a safety system (2) according to claim 13.

## Revendications

1. Procédé de fonctionnement d'un système de sécurité (2) pour une installation de siège (3) d'un véhicule automobile (1), avec les étapes :
la détection si un occupant du véhicule (9, 10) assis sur un siège du véhicule (5, 6) de l'installation de siège (3) a enfilé des lunettes de données électroniques (11, 12) ;
si l'occupant du véhicule (9, 10) a enfilé des lunettes de données électroniques (11, 12) : la vérification si une distance minimale (A1, A2) prédéfinie existe entre le siège du véhicule (5, 6) et un composant intérieur (15, 4) ;
lorsque la distance minimale (A1, A2) existe : la limitation d'une plage de réglage de l'installation de siège (3) de telle manière qu'une distance inférieure à la distance minimale (A1, A2) ne puisse être atteinte ;
lorsque la distance minimale (A1, A2) n'existe pas : l'établissement de la distance minimale (A1, A2) par le réglage automatique de l'installation de siège (3) et/ou l'émission d'un message concernant le non-respect de la distance minimale (A1, A2).

2. Procédé selon la revendication 1,
**caractérisé en ce que**
s'il s'agit pour le siège du véhicule d'un siège avant (5), la distance minimale (A1) se réfère à une distance entre le siège avant (5) et un tableau de bord (15) avec un airbag (16) intégré dans celui-ci.

3. Procédé selon la revendication 2,
**caractérisé en ce que**
lorsque la distance minimale (A1) existe, une plage de réglage du siège avant (5) est limitée de telle manière qu'une distance inférieure à la distance minimale (A1) entre le siège avant (5) et le tableau de bord (15) ne puisse pas être atteinte.

4. Procédé selon la revendication 2 ou 3,
**caractérisé en ce que**
lorsqu'une distance inférieure à la distance minimale (A1) a été atteinte, le siège avant (5) est réglé automatiquement de telle manière que la distance minimale (A1) entre le siège avant (5) et le tableau de bord (15) soit établie et/ou un message concernant le non-respect de la distance minimale (A1) soit émis.

5. Procédé selon l'une quelconque des revendications précédentes,
**caractérisé en ce que**
s'il s'agit pour le siège du véhicule d'un siège arrière (6), la distance minimale (A2) se réfère à une distance entre le siège arrière (6) et un dossier d'un siège avant (4) agencé devant.

6. Procédé selon la revendication 5,
**caractérisé en ce que**
lorsque la distance minimale (A2) existe, une plage de réglage du siège avant (4) est limitée de telle manière qu'une distance inférieure à la distance minimale (A2) entre le dossier du siège avant (4) et le siège arrière (6) ne puisse être atteinte.

7. Procédé selon la revendication 5 ou 6,
**caractérisé en ce que**
lorsqu'une distance inférieure à la distance minimale (A2) a été atteinte, le siège avant (4) est automatiquement réglé de telle manière que la distance minimale (A2) entre le dossier du siège avant (4) et le siège arrière (6) soit établie et/ou un message concernant le non-respect de la distance minimale (A2) soit émis.

8. Procédé selon l'une quelconque des revendications précédentes,
**caractérisé en ce que**
tant que la distance minimale (A1, A2) n'existe pas, les lunettes de données électroniques (11, 12) sont désactivées, mise à part une possibilité d'émettre un message concernant le non-respect de la distance minimale (A1, A2).

9. Procédé selon l'une quelconque des revendications précédentes,
**caractérisé en ce que**
après que l'occupant du véhicule (9, 10) a enfilé les lunettes de données électroniques (11, 12) dans le véhicule automobile (1), il est demandé au moyen des lunettes de données électroniques (11, 12) où l'occupant du véhicule (9, 10) est assis.

10. Procédé selon l'une quelconque des revendications précédentes,
**caractérisé en ce que**
il est détecté au moyen d'un système de caméra si l'occupant du véhicule (9, 10) a enfilé des lunettes de données électroniques (11, 12).

11. Procédé selon l'une quelconque des revendications précédentes,
**caractérisé en ce que**
la distance minimale (A1, A2) est prédéfinie individuellement en fonction d'une grandeur de l'occupant du véhicule (9, 10), en particulier en fonction d'une longueur d'un haut du corps de l'occupant du véhicule (9, 10).

12. Procédé selon l'une quelconque des revendications précédentes,
**caractérisé en ce que**
le réglage automatique de l'installation de siège (3) n'est effectué qu'après que celui-ci a été confirmé manuellement.

13. Système de sécurité (2) pour une installation de siège (3) d'un véhicule automobile (1), comprenant un dispositif de détection (13) qui est conçu afin de détecter si un occupant du véhicule (9, 10) assis sur un siège du véhicule (5, 6) de l'installation de siège (3) a enfilé des lunettes de données électroniques (11, 12), et un appareil de commande (14) qui est conçu afin
de vérifier si une distance minimale (A1, A2) prédéfinie existe entre le siège de véhicule (5, 6) et un composant intérieur (15, 4) si l'occupant du véhicule (9, 10) a enfilé des lunettes de données électroniques (11, 12) ;
de limiter une plage de réglage de l'installation de siège (3) de telle manière qu'une distance inférieure à la distance minimale (A1, A2) ne puisse être atteinte lorsque la distance minimale (A1, A2) existe ;
d'établir la distance minimale (A1, A2) par le réglage automatique de l'installation de siège (3) et/ou d'émettre un message concernant le non-respect de la distance minimale (A1, A2) lorsque la distance minimale (A1, A2) n'existe pas.

14. Véhicule automobile (1) avec un système de sécurité (2) selon la revendication 13.
